(19) Europäisches Patentamt
European Patent Office
Office européen des brevets

(11) **EP 3 920 145 A2**

(12) **EUROPEAN PATENT APPLICATION**

(43) Date of publication:
**08.12.2021 Bulletin 2021/49**

(51) Int Cl.:
**G06T 11/00** *(2006.01)*     **G06T 7/00** *(2017.01)*

(21) Application number: **21192749.6**

(22) Date of filing: **24.08.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.03.2021 CN 202110233520**

(71) Applicant: **Beijing Baidu Netcom Science and Technology Co., Ltd.**
**Beijing 100085 (CN)**

(72) Inventors:
• **Mao, Mingyuan**
  **Beijing, 100085 (CN)**
• **Feng, Yuan**
  **Beijing, 100085 (CN)**
• **Xin, Ying**
  **Beijing, 100085 (CN)**
• **Yuan, Pengcheng**
  **Beijing, 100085 (CN)**
• **Zhang, Bin**
  **Beijing, 100085 (CN)**
• **Wang, Xiaodi**
  **Beijing, 100085 (CN)**
• **Long, Xiang**
  **Beijing, 100085 (CN)**
• **Peng, Yan**
  **Beijing, 100085 (CN)**
• **Zheng, Honghui**
  **Beijing, 100085 (CN)**
• **Han, Shumin**
  **Beijing, 100085 (CN)**

(74) Representative: **Nederlandsch Octrooibureau**
**P.O. Box 29720**
**2502 LS The Hague (NL)**

(54) **METHOD AND APPARATUS FOR GENERATING IMAGE, DEVICE, STORAGE MEDIUM AND PROGRAM PRODUCT**

(57) The present disclosure discloses a method and apparatus for generating an image, a device, a storage medium and a program product, relates to the field of artificial intelligence, and particularly to computer vision and deep learning technologies, and may be applied in smart cloud and power grid inspection scenarios. A particular implementation of the method comprises: acquiring an original insulator image; performing an image transformation on the original insulator image to obtain a composite insulator image; and inputting the original insulator image and the composite insulator image into a pre-trained generative adversarial network to generate a target insulator image. According to the implementation, the image transformation is performed on the original insulator image, and then, massive target insulator images are generated through the generative adversarial network.

Fig. 1

**Description**

TECHNICAL FIELD

Embodiments of the present disclosure relate to the field of artificial intelligence, and particularly to computer vision and deep learning technologies, and may be applied in smart cloud and power grid inspection scenarios.

BACKGROUND

An insulator is an industrial product, which is used to insulate and suspend a conductor in high-voltage and ultra-high voltage alternating current and direct current transmission lines. The insulator is an important part of a transmission line, and is the only electrical insulation member and an important structural support member. The performance of the insulator and the rationality of the configuration of the insulator directly affect the safe and stable operation of the line.

However, in a long-term operation, the insulator may have a self-explosion problem due to various reasons. Therefore, it is important to automatically and accurately detect a self-explosion position of the insulator. With the development of deep learning, it becomes a mainstream method to supervise the training for a deep learning model using a training sample set so as to automatically detect a self-explosion point. At present, an image collection and a manual annotation are generally performed on the insulator in the transmission line, to obtain the training sample set and use the training sample set to train the deep learning model.

SUMMARY

Embodiments of the present disclosure provide a method and apparatus for generating an image, a device, a storage medium and a program product.

In a first aspect, embodiments of the present disclosure provide a method for generating an image, comprising: acquiring an original insulator image; performing an image transformation on the original insulator image to obtain a composite insulator image; and inputting the original insulator image and the composite insulator image into a pre-trained generative adversarial network to generate a target insulator image.

In a second aspect, embodiments of the present disclosure provide an apparatus for generating an image, comprising: an acquiring module, configured to acquire an original insulator image; a transforming module, configured to perform an image transformation on the original insulator image to obtain a composite insulator image; and a generating module, configured to input the original insulator image and the composite insulator image into a pre-trained generative adversarial network to generate a target insulator image.

In a third aspect, embodiments of the present disclosure provide an electronic device, comprising: one or more processors; and a memory, storing one or more programs, wherein the one or more programs, when executed by the one or more processors, cause the one or more processors to implement the method for generating an image provided by the first aspect.

In a forth aspect, embodiments of the present disclosure provide a computer-readable medium, storing a computer program thereon, wherein the program, when executed by a processor, causes the processor to implement the method for generating an image provided by the first aspect.

In a fifth aspect, an embodiment of the present disclosure provides a computer program product, comprising a computer program, wherein the computer program, when executed by a processor, implements the method for generating an image provided by the first aspect.

According to the method and apparatus for generating an image, the device, the storage medium and the program product that are provided in the embodiments of the present disclosure, the original insulator image is first acquired. Then, the image transformation is performed on the original insulator image to obtain the composite insulator image. Finally, the original insulator image and the composite insulator image are inputted into the pre-trained generative adversarial network to generate the target insulator image. In order to solve the problem that the number of insulator images is insufficient, a method of automatically generating an insulator image is provided. The image transformation is performed on the original insulator image, and then, massive target insulator images are generated through the generative adversarial network. The original insulator image has an annotation, and thus, the generated target insulator images also have an annotation. Moreover, the target insulator images have a high quality, and may be added to a training sample set of a deep learning model for a self-explosion detection. Accordingly, the cost problem of the manual collection and annotation is solved, and the development of the field of computer vision-based insulator self-explosion detection is effectively promoted. The deep learning model for the self-explosion detection is trained using the training sample set containing the massive target insulator images, and thus, the generalization and universality of the deep learning model may be ensured.

It should be understood that the content described in this part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

After reading detailed descriptions for non-limiting embodiments given with reference to the following accompanying drawings, other features, objectives and advantages of the present disclosure will be more apparent. The accompanying drawings are used for a better understanding of the scheme, and do not constitute a limitation to the present disclosure. Here:

Fig. 1 is a flowchart of an embodiment of a method for generating an image according to the present disclosure;

Fig. 2 is a flowchart of another embodiment of the method for generating an image according to the present disclosure;

Fig. 3 is a first schematic diagram of an enhancement of an insulator area;

Fig. 4 is a second schematic diagram of the enhancement of the insulator area;

Fig. 5 is a schematic diagram of an image rotation enhancement;

Fig. 6 is a schematic diagram of an image recombination;

Fig. 7 is a schematic structural diagram of a Cycle-GAN;

Fig. 8 is a block flow diagram of the method for generating an image;

Fig. 9 is a schematic structural diagram of an embodiment of an apparatus for generating an image according to the present disclosure; and

Fig. 10 is a block diagram of an electronic device used to implement the method for generating an image according to embodiments of the present disclosure.

DETAILED DESCRIPTION OF EMBODIMENTS

Exemplary embodiments of the present disclosure are described below in combination with the accompanying drawings, and various details of the embodiments of the present disclosure are comprised in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.
It should be noted that the embodiments in the present disclosure and the features in the embodiments may be combined with each other on a non-conflict basis. The present disclosure will be described below in detail with reference to the accompanying drawings and in combination with the embodiments.

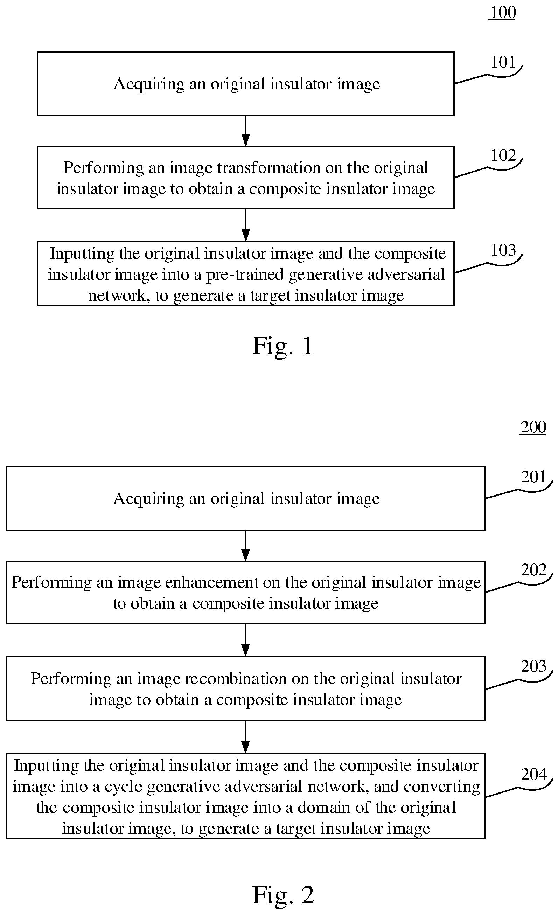

Fig. 1 illustrates a flow 100 of an embodiment of a method for generating an image according to the present disclosure. The method for generating an image comprises the following steps:
Step 101, acquiring an original insulator image.
In this embodiment, an executing body of the method for generating an image may acquire the original insulator image.
Here, an insulator is an industrial product, which is used to insulate and suspend a conductor in high-voltage and ultra-high voltage alternating current and direct current transmission lines. The insulator is an important part of a transmission line, and is the only electrical insulation member and an important structural support member. The performance of the insulator and the rationality of the configuration of the insulator directly affect the safe and stable operation of the line. At present, the insulator adopted in the transmission line is mainly divided into two types. One type is a glass disc suspension insulator applied to a tension string, and the other type is a rod composite suspension insulator applied to a suspension string and a jumper string. In the long-term operation, the insulators of the two types exhibit different operating performance and characteristics.
Generally, an image collection is performed on the insulator in the transmission line, and a self-explosion point is manually annotated. Thus, the original insulator image may be obtained. The original insulator image may comprise an insulator area and a background area. The insulators in different original insulator images may have different angles, colors and directions. The backgrounds in the different original insulator images may have different styles.

Step 102, performing an image transformation on the original insulator image to obtain a composite insulator image.

In this embodiment, the executing body may perform the image transformation on the original insulator image to obtain the composite insulator image.

Generally, by performing various image transformations on the original insulator image, the number of composite insulator images having different characteristics may be enriched. The image transformations may comprise, but not limited to, an image enhancement, an image recombination, and the like.

Here, the image enhancement may enhance useful information in an image. Some information is added to the image or data in the image is transformed by certain means, to selectively highlight an interested feature in the image or suppress some unwanted features in the image, such that the image is matched with visual response characteristics. The image recombination is to extract relevant display data in existing layers and recombine the data into an image of a new layer.

Step 103, inputting the original insulator image and the composite insulator image into a pre-trained generative adversarial network, to generate a target insulator image.

In this embodiment, the above executing body may input the original insulator image and the composite insulator image into the pre-trained GAN (generative adversarial network), to generate the target insulator image.

The GAN plays a very important role in the field of image generation. The GAN network is mainly composed of two parts, namely a generator G and a discriminator D. Here, the generator G is a network generating an image, which receives a random noise z, and generates an image through the noise z, the image being denoted as G(z). The discriminator D is a discriminative network, which discriminates whether an image is "real." An input parameter of the discriminator D is x, x representing an image. An output D(x) represents the probability that the image x is a real image. If D(x) is 1, it represents that the image is 100% real. If D(x) is 0, it represents that the image may not be real. During training, the purpose of the generator G is to generate a real image as much as possible, to deceive the discriminator D. The purpose of the discriminator D is to separate the image generated by the generator G from the real image as much as possible. In this way, the generator G and the discriminator D constitute a dynamic "game process." In the most ideal state, the generator G may generate an image G(z) sufficient to "be considered as the real image." For the discriminator D, it is difficult to discriminate whether the image generated by the generator G is real. Therefore, D(G(z))=0.5. In this way, a model G of the generator is obtained, and the model may be used to generate an image. A loss function of the GAN is as follows:

$$\min_{G} \max_{D} V(D, G) = E_{x \sim Pdata(x)}[\log(D(x)] + E_{z \sim Pz(z)}[\log(1 - D(G(z)))]$$

Here, the loss function of the GAN is composed of two terms. Here, x represents a real image, z represents a noise inputted into the generator G, G(z) represents an image generated by the generator G, and D(x) represents a probability that the discriminator D discriminates whether the real image is real. Since x is real, the closer to 1 this value is, the better the result of D is. Moreover, D(G(z)) is a probability that the discriminator D discriminates whether the image generated by the generator G is real.

The composite insulator image obtained through the image transformation has a relatively obvious mark. Moreover, the style of the background of the composite insulator image is relatively simple, for example, light and weather conditions are relatively fixed. If the composite insulator image is directly used to train a deep learning model, the robustness of the deep learning model would be poor. Therefore, the GAN is selected to perform further processing on the composite insulator image, and thus, a more real image may be generated and the style migration between images may be realized.

According to the method for generating an image provided in the embodiment of the present disclosure, the original insulator image is first acquired. Then, the image transformation is performed on the original insulator image to obtain the composite insulator image. Finally, the original insulator image and the composite insulator image are inputted into the pre-trained generative adversarial network to generate the target insulator image. In order to solve the problem that the number of insulator images is insufficient, a method of automatically generating an insulator image is provided. The image transformation is performed on the original insulator image, and then, massive target insulator images are generated through the generative adversarial network. The original insulator image has an annotation, and thus, the generated target insulator images also have an annotation. Moreover, the target insulator images have a high quality, and may be added to a training sample set of a deep learning model for a self-explosion detection. Accordingly, the cost problem of the manual collection and annotation is solved, and the development of the field of computer vision-based insulator self-explosion detection is effectively promoted. The deep learning model for the self-explosion detection is trained using the training sample set containing the massive target insulator images, and thus, the generalization and universality of the deep learning model may be ensured.

According to the method for generating an image provided in the embodiment of the present disclosure, the massive target insulator images may be automatically generated by using only a few original insulator images, and thus, the training sample set of the deep learning model is expanded. The position of the insulator and the position of the self-explosion point are recorded during the composition of the data, and thus, the manual annotation would not be required, thereby reducing the cost of the annotation and achieving a high accuracy rate. The generated target insulator images have more abundant scale, rotation and background information, which is conducive to improving the robustness and generalization of the model.

According to the method for generating an image provided in the embodiment of the present disclosure, the massive target insulator images may be generated. For example, if there are 40 original insulator images, the number of target insulator images generated through the method for generating an image provided in the embodiment of the present disclosure may reach 5000. The training for an insulator self-explosion recognition model is performed using the training sample set containing the 40 original insulator images and the 5000 target insulator images, thereby improving the accuracy rate of the detection of the model.

Further referring to Fig. 2, Fig. 2 illustrates a flow 200 of an embodiment of the method for generating an image according to the present disclosure. The method for generating an image comprises the following steps:

Step 201, acquiring an original insulator image.

In this embodiment, the particular operation of step 201 is described in detail in step 101 of the embodiment shown in Fig. 1, which will not be repeatedly described here.

Step 202, performing an image enhancement on the original insulator image to obtain a composite insulator image.

In this embodiment, an executing body of the method for generating an image may perform the image enhancement on the original insulator image to obtain the composite insulator image. Here, the image enhancement may enhance useful information in an image. Some information is added to the image or data in the image is transformed by certain means, to selectively highlight an interested feature in the image or suppress some unwanted features in the image, such that the image is matched with visual response characteristics. Traditional image enhancement algorithms may comprise, but not limited to, up-sampling, down-sampling, a shift, a flip, a rotation, etc. for an image. By performing the image enhancement on the original insulator image, the number of composite insulator images having different characteristics may be enriched.

In some alternative implementations of this embodiment, the scene of the original insulator image is mostly in a suburb. Thus, the background of the image is relatively stable, and the diversity of the image is mainly concentrated in an insulator area. Due to a different shooting angle and a different shooting position, the insulator tends to present different shapes and different directions in the same background. Thus, the image enhancement may be implemented by transforming the insulator area. Here, the transforming of the insulator area comprises the following steps.

First, a segmentation is performed on the original insulator image, to obtain an insulator area and a background area.

Generally, the insulator area is annotated in the original insulator image, and thus, the insulator area may be segmented from the original insulator image according to the annotation.

Then, a transformation is performed on the insulator area to obtain a transformed insulator area.

Here, the transformation for the insulator area may comprise, but not limited to, at least one of: random cropping and a scale transformation, a centrosymmetric transformation, or the like. Through the random cropping and the scale transformation, the composite insulator image may have more abundant target scales. Through the centrosymmetric transformation, the target may have a plurality of pieces of abundant directional information.

Finally, the transformed insulator area and the background area are stitched to obtain the composite insulator image.

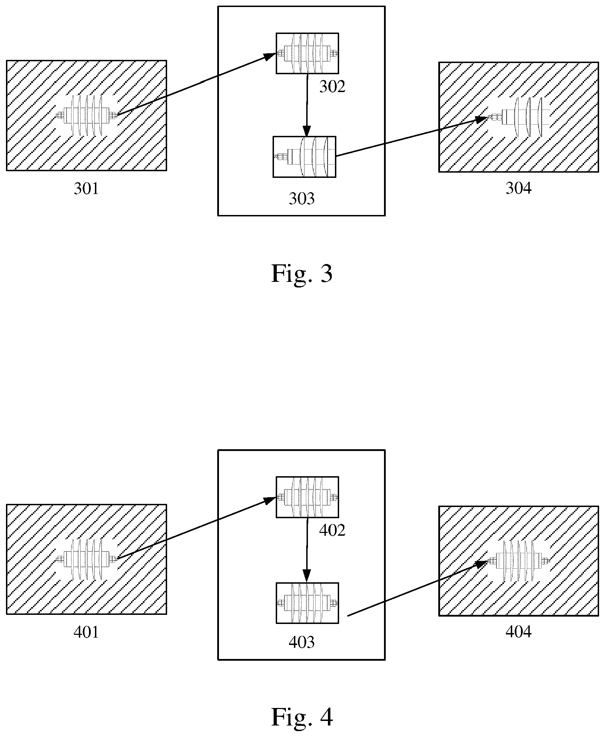

For ease of understanding, Fig. 3 illustrates a first schematic diagram of an enhancement of an insulator area. As shown in Fig. 3, an insulator area 302 is first segmented from an original insulator image 301. Then, random cropping and a scale transformation are performed on the insulator area 302, to obtain a transformed insulator image 303. Finally, the transformed insulator image 303 is placed back to the corresponding position in the original insulator image 301, to obtain a target insulator image 304.

For ease of understanding, Fig. 4 illustrates a second schematic diagram of the enhancement of the insulator area. As shown in Fig. 4, an insulator area 402 is first segmented from an original insulator image 401 according to an annotation. Then, a centrosymmetric transformation is performed on the insulator area 402, to obtain a transformed insulator image 403. Finally, the transformed insulator image 403 is placed back to the corresponding position in the original insulator image 401, to obtain a target insulator image 404.

In some alternative implementations of this embodiment, the original insulator image is generally captured by an unmanned aerial vehicle from the upper air, and the insulator in the image has a plurality of angles. Accordingly, the image enhancement may be implemented by performing a rotation on the image. Here, the rotation for the image comprises the following steps.

First, a rotation angle is selected at random.

Generally, a plurality of angle ranges may be set, and the rotation angle may be obtained by performing random sampling in each angle range. Here, the plurality of angle ranges are preset and do not overlap with each other.

Then, a rotation direction is determined at random.

Here, the rotation direction may comprise, but not limited to, a counterclockwise rotation, a clockwise rotation, and the like.

Finally, the original insulator image is rotated by the above rotation angle according to the rotation direction, to obtain a composite insulator image.

A large number of insulator images may be composed in different angle ranges. At the same time, the uniformity of various angles is ensured, the risk of overfitting of a model is reduced, and the rotational invariance and generalization performance of the model are greatly improved.

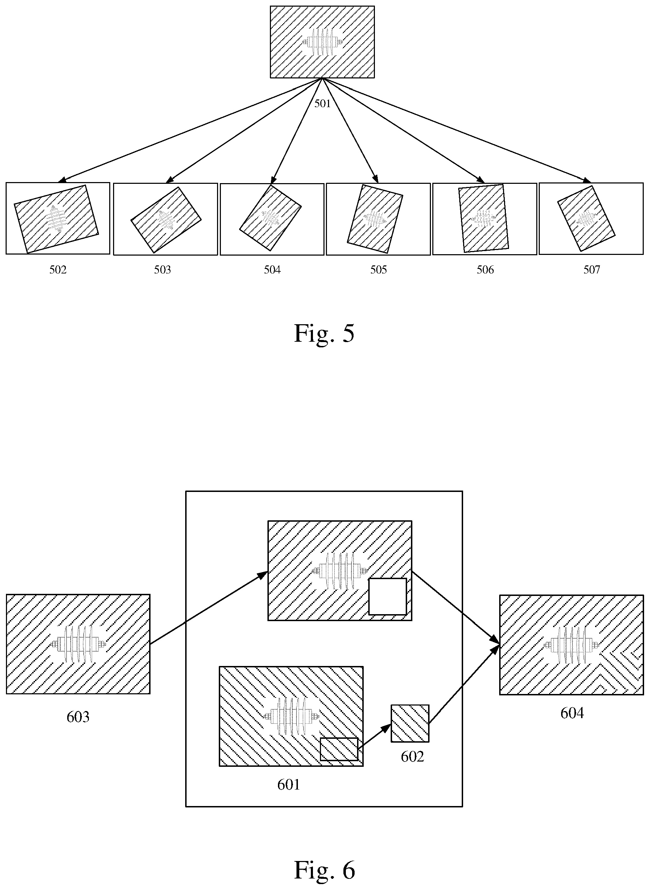

For ease of understanding, Fig. 5 is a schematic diagram of an image rotation enhancement. As shown in Fig. 5, six angle ranges are first set, which are respectively a range from 0 to 20 degrees, a range from 20 to 40 degrees, a range from 40 to 60 degrees, a range from 60 to 80 degrees, a range of from 80 to 100 degrees, and a range from 100 to 120 degrees. Then, random sampling is performed in each range to select a rotation degree, and a rotation direction is determined at random. Finally, an original insulator image 501 is rotated according to the rotation direction and the rotation angle, to obtain the composite insulator images 502, 503, 504, 505, 506 and 507.

Step 203, performing an image recombination on the original insulator image to obtain a composite insulator image.

In this embodiment, the above executing body may perform the image recombination on the original insulator image to obtain the composite insulator image. Here, the image recombination is to extract relevant display data in existing layers and recombine the data into an image of a new layer. By performing the image recombination on the original insulator image, the number of composite insulator images having different characteristics may be enriched. By performing the image recombination on the original insulator image, the number of the composite insulator images and the abundance of features may be greatly increased, which is very helpful in training the model.

In some alternative implementations of this embodiment, the insulator and the background are relatively independent. Thus, the image recombination may be implemented by freely combining the insulator and background of the original insulator image. Here, the image recombination comprises the following steps:

First, a target area is extracted from a first original insulator image in the original insulator image.

Here, the target area may be an arbitrary area of the first original insulator image, which may be a part of the insulator area, or may be a part of the background area.

Then, a scale transformation is performed on the target area.

Finally, a transformed target area is fused into a second original insulator image in the original insulator image, to obtain the composite insulator image.

Here, the first original insulator image and the second original insulator image are different original insulator images.

For ease of understanding, Fig. 6 is a schematic diagram of an insulator image recombination. As shown in Fig. 6, a target area is first extracted from a first original insulator image 601. Then, a scale transformation is performed on the target area 602 to obtain a transformed target area 602. Finally, the transformed target area 602 is fused into a second original insulator image 603 to obtain a composite insulator image 604.

Step 204, inputting the original insulator image and the composite insulator image into a cycle generative adversarial network, and converting the composite insulator image into a domain of the original insulator image, to generate a target insulator image.

In this embodiment, the original insulator image and the composite insulator image are inputted to the Cycle-GAN (cycle generative adversarial network), and the composite insulator image is converted into the domain of the original insulator image, to generate the target insulator image.

Unlike a traditional GAN, the input of the Cycle-GAN may refer to any two images, thus making a conversion between the images of two definition domains. Here, the original insulator image and the composite insulator image may be regarded as the inputs of the two definition domains. Through the Cycle-GAN, the composite insulator image may be converted into the domain of the original insulator image, which eliminates the difference between the definition domains of a real image and a generated image, and realizes the style migration between the images.

In practice, in a long-term operation, the insulator may have a self-explosion problem due to various reasons. It is important to automatically and accurately detect a self-explosion position of the insulator. With the development of deep learning, it becomes a mainstream method to supervise the training for a deep learning model using a training sample set so as to automatically detect a self-explosion point. In general, in order to ensure the performance of self-service settlement, a large number of images of the insulator and the self-explosion point are required to perform the training on the deep learning model, to ensure the generalization and universality of the model. Since the number of manually collected original insulator images is extremely limited, it is required to use the Cycle-GAN to generate massive target insulator images, and add the target insulator images to the training sample set. In this way, the number and abundance of samples in the training sample set are greatly expanded, and the performance of the deep learning model is effectively improved. Moreover, the use of the Cycle-GAN may make the result of the image transformation more natural, and the transformation of the style of the image may be implemented, thereby making the generated target insulator images more real.

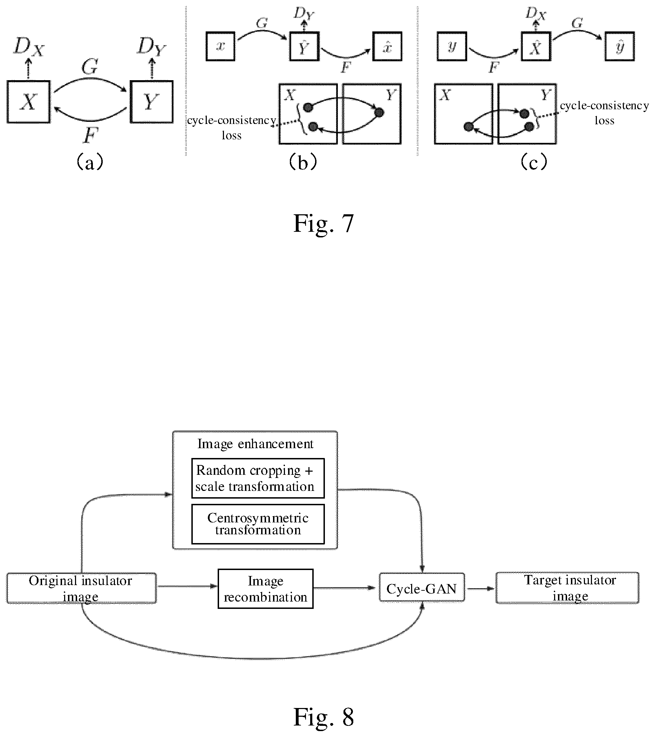

Typically, the Cycle-GAN is a ring structure consisting mainly of two generators and two discriminators. For ease of understanding, Fig. 7 is a schematic structural diagram of a Cycle-GAN. As shown in Fig. 7, the Cycle-GAN comprises a generator G, a generator F, a discriminator Dx, and a discriminator Dy. An image $\widehat{Y}$ in a domain Y is generated after an input image $x$ in a domain X passes through the generator G, and then, an input image $\widehat{x}$ in the domain X is reconstructed after the image $\widehat{Y}$ passes through the generator F. An image $\widehat{X}$ in the domain X is generated after an input image $y$ in the domain Y passes through the generator F, and then, an input image $\widehat{y}$ in the domain Y is reconstructed after the image $\widehat{X}$ passes through the generator G. The discriminator Dx is used to discriminate the image $\widehat{X}$ in the domain X, and the discriminator Dy is used to discriminate the image $\widehat{Y}$ in the domain Y. Thus, a style migration between images is ensured. When a style conversion is performed, it is to be ensured that the geometric shape and spatial relationship of an object in the image do not change. Here, a loss function of the Cycle-GAN is a cycle-consistency loss function.

It may be seen from Fig. 2 that, as compared with the embodiment corresponding to Fig. 1, the method for generating an image in this embodiment emphasizes the image transformation step and the image generation step. Accordingly, according to the scheme described in this embodiment, by performing the image enhancement and the image recombination on the original insulator image, the number of the composite insulator images having different characteristics may be enriched. By performing rendering and the style migration on the composite insulator images through the cycle generative adversarial network, the massive target insulator images may be generated.

For ease of understanding, Fig. 8 is a block flow diagram of a method for generating an image. As shown in Fig. 8, an image enhancement and an image recombination are first performed on an original insulator image. Here, the image enhancement comprises random cropping and a scale transformation, and comprises a centrosymmetric transformation. Then, the results of the image enhancement and the image recombination are inputted to a Cycle-GAN to perform a style migration. Thus, a target insulator image may be obtained. The input of the Cycle-GAN is two irrelevant images. The images before and after an image transformation are used as the input, to make the transformed image more natural, which is conducive to improving the robustness and generalization of a model.

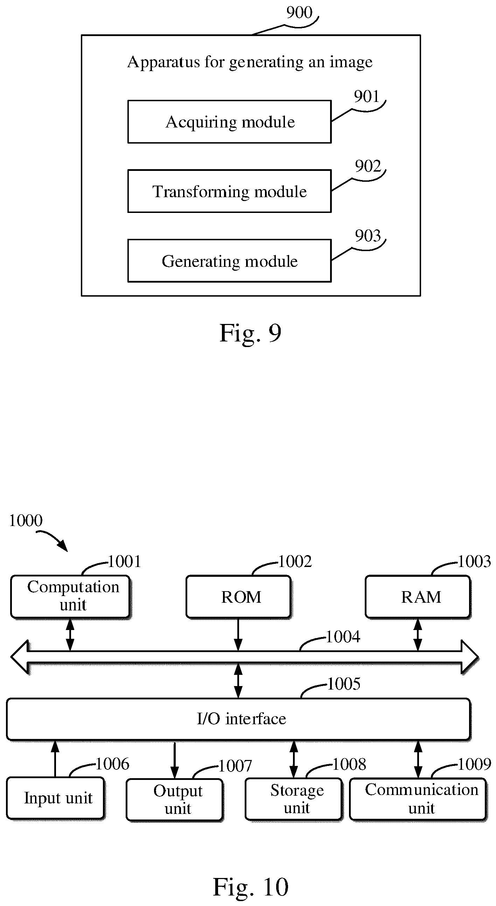

Further referring to Fig. 9, as an implementation of the method shown in the above drawings, the present disclosure provides an embodiment of an apparatus for generating an image. The embodiment of the apparatus corresponds to the embodiment of the method shown in Fig. 1, and the apparatus may be applied in various electronic devices.

As shown in Fig. 9, the apparatus 900 for generating an image in this embodiment may comprise: an acquiring module 901, a transforming module 902 and a generating module 903. Here, the acquiring module 901 is configured to acquire an original insulator image. The transforming module 902 is configured to perform an image transformation on the original insulator image to obtain a composite insulator image. The generating module 903 is configured to input the original insulator image and the composite insulator image into a pre-trained generative adversarial network to generate a target insulator image.

In this embodiment, for particular processes of the acquiring module 901, the transforming module 902 and the generating module 903 in the apparatus 900 for generating an image, and their technical effects, reference may be respectively made to relative descriptions of steps 101-103 in the corresponding embodiment of Fig. 1, which will not be repeatedly described here.

In some alternative implementations of this embodiment, the transforming module 902 comprises: an enhancing sub-module, configured to perform an image enhancement on the original insulator image to obtain the composite insulator image; and/or a recombining sub-module, configured to perform an image recombination on the original insulator image to obtain the composite insulator image.

In some alternative implementations of this embodiment, the enhancing sub-module is further configured to: perform a segmentation on the original insulator image, to obtain an insulator area and a background area; perform a transformation on the insulator area to obtain a transformed insulator area; and stitch the transformed insulator area and the background area to obtain the composite insulator image.

In some alternative implementations of this embodiment, the transformation for the insulator area comprises at least one of: random cropping and a scale transformation, or a centrosymmetric transformation.

In some alternative implementations of this embodiment, the enhancing sub-module comprises: a selecting unit, configured to select a rotation angle at random; a determining unit, configured to determine a rotation direction at random; and a rotating unit, configured to rotate the original insulator image by the rotation angle according to the rotation direction, to obtain the composite insulator image.

In some alternative implementations of this embodiment, the selecting unit is further configured to: perform random sampling in a plurality of angle ranges to obtain the rotation angle, the plurality of angle ranges being preset and not overlapping with each other.

In some alternative implementations of this embodiment, the recombining sub-module is further configured to: extract a target area from a first original insulator image in the original insulator image; perform a scale transformation on the target area; and fuse a transformed target area into a second original insulator image in the original insulator image, to obtain the composite insulator image, the first original insulator image and the second original insulator image being different original insulator images.

In some alternative implementations of this embodiment, the generative adversarial network is a cycle generative adversarial network. The generating module is further configured to: input the original insulator image and the composite insulator image into the cycle generative adversarial network, and convert the composite insulator image into a domain of the original insulator image, to generate the target insulator image.

In some alternative implementations of this embodiment, the cycle generative adversarial network comprises a generator G, a generator F, a discriminator Dx and a discriminator Dy. An image in a domain Y is generated after an input image in a domain X passes through the generator G, and then, an input image in the domain X is reconstructed after the image in the domain Y passes through the generator F. An image in the domain X is generated after an input image in the domain Y passes through the generator F, and then, an input image in the domain Y is reconstructed after the image in the domain X passes through the generator G. The discriminator Dx is used to discriminate the image in the domain X, and the discriminator Dy is used to discriminate the image in the domain Y.

According to an embodiment of the present disclosure, the present disclosure further provides an electronic device, a readable storage medium, and a computer program product.

Fig. 10 is a schematic block diagram of an exemplary electronic device 1000 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 10, the electronic device 1000 comprises a computation unit 1001, which may execute various appropriate actions and processes in accordance with a computer program stored in a read-only memory (ROM) 1002 or a computer program loaded into a random access memory (RAM) 1003 from a storage unit 1008. The RAM 1003 also stores various programs and data required by operations of the device 1000. The computation unit 1001, the ROM 1002 and the RAM 1003 are connected to each other through a bus 1004. An input/output (I/O) interface 1005 is also connected to the bus 1004.

The following components in the device 1000 are connected to the I/O interface 1005: an input unit 1006, for example, a keyboard and a mouse; an output unit 1007, for example, various types of displays and a speaker; a storage device 1008, for example, a magnetic disk and an optical disk; and a communication unit 1009, for example, a network card, a modem, a wireless communication transceiver. The communication unit 1009 allows the device 1000 to exchange information/data with an other device through a computer network such as the Internet and/or various telecommunication networks.

The computation unit 1001 may be various general-purpose and/or particular-purpose processing assemblies having processing and computing capabilities. Some examples of the computation unit 1001 comprise, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 1001 performs the various methods and processes described above, for example, the method for generating an image. For example, in some embodiments, the method for generating an image may be implemented as a computer software program, which is tangibly comprised in a machine readable medium, for example, the storage device 1008. In some embodiments, part or all of the computer program may be loaded into and/or installed on the device 1000 via the ROM 1002 and/or the communication unit 1009. When the computer program is loaded into the RAM 1003 and executed by the computation unit 1001, one or more steps of the above method for testing a stress based on a cloud service may be performed. Alternatively, in other embodiments, the computation unit 1001 may be configured to perform the method for testing a stress based on a cloud service through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may comprise: being implemented in one or more computer programs, where the one or more computer programs may be executed and/or interpreted on a programmable system comprising at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may comprise or store a program for use by or in connection with an instruction execution system, apparatus or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus or device, or any appropriate combination thereof. A more particular example of the machine-readable storage medium may comprise an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, comprising acoustic input, speech input or tactile input.

The systems and technologies described herein may be implemented in: a computing system comprising a background component (such as a data server), or a computing system comprising a middleware component (such as an application server), or a computing system comprising a front-end component (such as a user computer having a graphical user interface or a web browser through which the user may interact with the implementations of the systems and technologies described herein), or a computing system comprising any combination of such background component, middleware component or front-end component. The components of the systems may be interconnected by any form or medium of digital data communication (such as a communication network). Examples of the communication network comprise a local area network (LAN), a wide area network (WAN), and the Internet.

A computer system may comprise a client and a server. The client and the server are generally remote from each other, and generally interact with each other through the communication network. A relationship between the client and the server is generated by computer programs running on a corresponding computer and having a client-server relationship with each other.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be comprised within the scope of the present disclosure.

**Claims**

1. A method for generating an image, comprising:

acquiring (101, 201) an original insulator image;
performing (102) an image transformation on the original insulator image to obtain a composite insulator image; and
inputting (103) the original insulator image and the composite insulator image into a pre-trained generative adversarial network to generate a target insulator image.

2. The method according to claim 1, wherein the performing (102) comprises:

performing (202) an image enhancement on the original insulator image to obtain the composite insulator image; and/or
performing (203) an image recombination on the original insulator image to obtain the composite insulator image.

3. The method according to claim 2, wherein the performing (202) an image enhancement on the original insulator image to obtain the composite insulator image comprises:

performing a segmentation on the original insulator image, to obtain an insulator area and a background area;
performing a transformation on the insulator area to obtain a transformed insulator area; and
stitching the transformed insulator area and the background area to obtain the composite insulator image.

4. The method according to claim 3, wherein the transformation for the insulator area comprises at least one of: random cropping and a scale transformation, or a centrosymmetric transformation.

5. The method according to any one of claims 2-4, wherein the performing (202) an image enhancement on the original insulator image to obtain the composite insulator image comprises:

selecting a rotation angle at random;
determining a rotation direction at random; and
rotating the original insulator image by the rotation angle according to the rotation direction, to obtain the composite insulator image.

6. The method according to claim 5, wherein the selecting comprises:
performing random sampling in a plurality of angle ranges to obtain the rotation angle, the plurality of angle ranges being preset and not overlapping with each other.

7. The method according to any one of claims 1-6, wherein the performing (203) an image recombination on the original insulator image to obtain the composite insulator image comprises:

extracting a target area from a first original insulator image in the original insulator image;
performing a scale transformation on the target area; and
fusing a transformed target area into a second original insulator image in the original insulator image, to obtain the composite insulator image, the first original insulator image and the second original insulator image being different original insulator images.

8. The method according to any one of claims 1-7, wherein the generative adversarial network is a cycle generative adversarial network, and
the inputting (103) comprises:
inputting (204) the original insulator image and the composite insulator image into the cycle generative adversarial network, and converting the composite insulator image into a domain of the original insulator image, to generate the target insulator image.

9. The method according to claim 8, wherein the cycle generative adversarial network comprises a generator (G), a generator (F), a discriminator (Dx) and a discriminator (Dy); a first image in a domain (Y) is generated after a first input image in a domain (X) passes through the generator (G), and then, a second input image in the domain (X) is reconstructed after the first image in the domain (Y) passes through the generator (F); a second image in the domain (X) is generated after a third input image in the domain (Y) passes through the generator (F), and then, a forth input image in the domain (Y) is reconstructed after the second image in the domain (X) passes through the generator (G); and the discriminator (Dx) is used to discriminate an image in the domain (X), and the discriminator (Dy) is used to discriminate an image in the domain (Y).

**10.** An apparatus for generating an image, comprising:

an acquiring module (901), configured to acquire an original insulator image;
a transforming module (902), configured to perform an image transformation on the original insulator image to obtain a composite insulator image; and
a generating module (903), configured to input the original insulator image and the composite insulator image into a pre-trained generative adversarial network to generate a target insulator image.

**11.** The apparatus according to claim 10, wherein the transforming module (902) comprises:

an enhancing sub-module, configured to perform an image enhancement on the original insulator image to obtain the composite insulator image; and/or
a recombining sub-module, configured to perform an image recombination on the original insulator image to obtain the composite insulator image.

**12.** The apparatus according to claim 11, wherein the enhancing sub-module is further configured to:

perform a segmentation on the original insulator image, to obtain an insulator area and a background area;
perform a transformation on the insulator area to obtain a transformed insulator area; and
stitch the transformed insulator area and the background area to obtain the composite insulator image.

**13.** An electronic device, comprising:

at least one processor; and
a storage device, communicated with the at least one processor,
wherein the storage device stores an instruction executable by the at least one processor, and the instruction is executed by the at least one processor, to enable the at least one processor to perform the method according to any one of claims 1-9.

**14.** A non-transitory computer readable storage medium, storing a computer instruction, wherein the computer instruction, when executed by a computer, cause the computer to perform the method according to any one of claims 1-9.

**15.** A computer program product, comprising a computer program, wherein the computer program, when executed by a processor, implements the method according to any one of claims 1-9.

<u>100</u>

| Acquiring an original insulator image | 101 |

↓

| Performing an image transformation on the original insulator image to obtain a composite insulator image | 102 |

↓

| Inputting the original insulator image and the composite insulator image into a pre-trained generative adversarial network, to generate a target insulator image | 103 |

Fig. 1

<u>200</u>

| Acquiring an original insulator image | 201 |

↓

| Performing an image enhancement on the original insulator image to obtain a composite insulator image | 202 |

↓

| Performing an image recombination on the original insulator image to obtain a composite insulator image | 203 |

↓

| Inputting the original insulator image and the composite insulator image into a cycle generative adversarial network, and converting the composite insulator image into a domain of the original insulator image, to generate a target insulator image | 204 |

Fig. 2

Fig. 3

Fig. 4

Fig. 5

Fig. 6

Fig. 7

Fig. 8

900

Apparatus for generating an image

Acquiring module — 901

Transforming module — 902

Generating module — 903

Fig. 9

1000

Computation unit — 1001    ROM — 1002    RAM — 1003

— 1004

— 1005

I/O interface

Input unit — 1006    Output unit — 1007    Storage unit — 1008    Communication unit — 1009

Fig. 10